# EUROPÄISCHE PATENTSCHRIFT

(11) **EP 3 644 020 B1**
(45) Veröffentlichungstag und Bekanntmachung des Hinweises auf die Patenterteilung: **01.12.2021**
(21) Anmeldenummer: 19202143.4
(22) Anmeldetag: 09.10.2019
(51) Int. Cl.: G01D 21/02, G01D 11/24, A61C 1/00, A61C 17/00

(54) **DRUCKLUFTKOMPRESSORSYSTEM MIT EINER SENSORENEINHEIT**
COMPRESSED AIR COMPRESSOR SYSTEM WITH SENSOR UNIT
SYSTÈME DE COMPRESSEUR À AIR COMPRIMÉ DOTÉ D'UNE UNITÉ DE CAPTEUR

(30) Priorität: 24.10.2018 DE 102018126553
(43) Veröffentlichungstag der Anmeldung: 29.04.2020
(73) Patentinhaber: Dürr Dental SE, 74321 Bietigheim-Bissingen (DE)
(72) Erfinder: Hatzfeld, Falk, 74379 Ingersheim (DE)
(74) Vertreter: Ostertag & Partner Patentanwälte mbB

(56) Entgegenhaltungen:
- DE-A1-102008 002 499
- DE-T2- 60 110 300
- KR-B1- 101 733 429
- US-A1- 2006 134 480

## Beschreibung

### HINTERGRUND DER ERFINDUNG

### 1. Gebiet der Erfindung

Die Erfindung betrifft ein Druckluftkompressorsystem mit einer Sensoreneinheit.

### 2. Beschreibung des Standes der Technik

Druckluftkompressorsysteme werden in unterschiedlichen Industriezweigen sowie auch im medizinischen und dentalmedizinischen Bereich zur Bereitstellung von Druckluft vorgesehen. Insbesondere werden im medizinischen und dentalmedizinischen Bereich Druckluftkompressorsysteme benötigt, welche bestimmte Voraussetzungen an die Güte der Druckluft erfüllen.

So ist es beispielsweise notwendig, dass die im medizinischen und dentalmedizinischen Bereich verwendete Druckluft möglichst frei von etwaigen Ölrückständen ist. Daher kommen in derartigen Druckluftkompressorsystemen häufig Membranpumpen oder andere Pumpen zum Einsatz, die wenig oder keinen Öleintrag in die geförderte Luft aufweisen. Zudem werden an verschiedenen Stellen entsprechende Trockner und/oder Filter bereitgestellt, um möglichst trockene und staubfreie Druckluft beispielsweise an einem dentalen Arbeitsplatz bereitzustellen.

Im Folgenden und vor allem in Bezug auf die Erfindung ist der Begriff Druckluft nicht nur für komprimierte Umgebungsluft zu verstehen sondern stellvertretend für sämtlich Gase und/oder Gasgemische, die mit Druckluftkompressorsystemen bereitgestellt werden.

Ein typisches Druckluftkompressorsystem umfasst zunächst einen Kompressor zur Erzeugung der Druckluft sowie zumeist einen Drucklufttank, in welchem die Druckluft bevorratet wird. Denn es hat sich herausgestellt, dass ein energieeffizienterer Betrieb vor allem dadurch erreicht wird, dass der Kompressor nur von Zeit zu Zeit zum Wiederauffüllen des Drucklufttanks betrieben wird anstatt kontinuierlich nur bei Bedarf die Druckluft zu erzeugen. Auf diese Weise wird auch eine etwaige Lärmbelästigung während des Betriebs vor allem in medizinischen und dentalmedizinischen Umgebungen auf kurze Zeitintervalle beschränkt.

Auch wird durch die Bevorratung der Druckluft die Druckluft quasi verzögerungsfrei an einer Abnahmestelle bereitgestellt.

Für diesen intermittierenden Betrieb des Kompressors ist es bekannt, am Drucklufttank einen sogenannten Druckschalter vorzusehen. Der Druckschalter ist im Grunde ein Drucksensor, mit welchem der Druck der Druckluft im Inneren des Drucklufttanks gemessen wird. Eine Druckfensterschaltung setzt dann einen unteren und einen oberen Schwellenwert für den Druck. Das heißt, sobald der Druck im Inneren des Drucklufttanks unter die untere Schwelle absinkt, wird der Kompressor aktiviert. Er bleibt dann solange angeschaltet, bis der Druck im Drucklufttank den oberen Schwellenwert erreicht und wird daraufhin wieder deaktiviert. Der Druck im Drucklufttank bewegt sich so nur innerhalb eines vorgegebenen Druckfensters.

Nachteilig an den bisherigen Druckluftkompressorsystemen ist ein hoher Wartungsaufwand, da die Schaltungen, welche den Kompressor steuern und welche mit den Drucksensoren sowie anderen Sensoren des gesamten Druckluftkompressorsystems verbunden sind häufig in Einzelanfertigung für das jeweilige Druckluftkompressorsystem ausgelegt sind und daher etwaige Wartungen nur von geschultem Personal durchgeführt werden können.

So ist beispielsweise aus der DE 601 10 300 T2 ein Kompressorschutz- und Regelungssystem für einen Klimaanlagenkompressor bekannt, das in einem eigenen Gehäuse am Kompressor angebracht ist. Verschiedene Drucksensoren, die an verschiedenen Stellen des Kompressors angeordnet sind, werden dabei über jeweils eigene Drähte mit dem Gehäuse verbunden.

Aus der US 2006/0134480 A1 ist eine Sensoreinheit zur Überwachung des Prozessgasdrucks in einer Brennstoffzelle im Automobilbereich bekannt. Die Sensoreinheit weist dabei ein kompaktes Gehäuse auf, in welchem ein Drucksensor, ein Temperatursensor und ein Feuchtigkeitssensor angeordnet sind.

Aus der DE 10 2008 002 499 A1 ist ein Kraftstoffeinspritzsystem wie beispielsweise ein Common-Rail-System mit einem kombinierten Druck- und Temperatursensor bekannt, wobei der Temperatursensor optisch arbeitet. Aus der KR 101 733 429 B1 ist ein Druckluftkompressorsystem für den dentalmedizinischen Bereich bekannt.

### ZUSAMMENFASSUNG DER ERFINDUNG

Es ist daher Aufgabe der Erfindung, vor allem ein Druckluftkompressorsystem zur Bereitstellung für den medizinischen und dentalmedizinischen Bereich mit einer Sensoreneinheit anzugeben, mit welcher sich der Wartungsaufwand reduzieren lässt.

Erfindungsgemäß gelingt dies durch ein Druckluftkompressorsystem zur Bereitstellung von Druckluft für den medizinischen und dentalmedizinischen Bereich mit
a) einem Drucklufttank,
b) einem Kompressor, und
c) mit einer Sensoreneinheit, die in einem gemeinsamen Modulgehäuse aufweist:
   - eine Druckmesseinheit zur Messung eines Drucks,
   - mindestens eine weitere Messeinheit zur Messung einer anderen physikalischen und/oder chemischen Größe,
   - eine Auswerte- und Steuereinheit, die dazu eingerichtet ist, die Druckmesseinheit zur Messung des Drucks und die weitere Messeinheit zur Messung der anderen physikalischen und/oder chemischen Größe anzusteuern sowie Messdaten bereitzustellen, und
   - eine Außenschnittstelle zur Ausgabe der bereitgestellten Messdaten.

Der Erfinder hat erkannt, dass ein größeres Problem bei der Wartung eines Druckluftkompressorsystems die teilweise komplexe Verkabelung verschiedener Messeinheiten mit einer zentralen Steuereinheit ist. Erfindungsgemäß ist es daher sinnvoll, eine Sensoreneinheit zur Messung verschiedener physikalischer und/oder chemischer Größen in einem gemeinsamen Modulgehäuse als smarte Komponente bereitzustellen. Über die gemeinsame Außenschnittstelle kann dann der gemessene Druck und die anderen Messdaten der mindestens einen weiteren Messeinheit bereitgestellt werden.

Durch das Zusammenfassen mehrerer verschiedener Messeinheiten in einem Modulgehäuse einer Sensoreneinheit reduziert sich der Verkabelungsaufwand des Druckluftkompressorsystems, da an der Außenschnittstelle die verschiedenen Messdaten der einzelnen Messeinheiten ausgegeben werden können. Zwar muss dadurch bei einer Wartung sogleich die gesamte smarte Sensoreneinheit ausgetauscht werden. Da die Vornahme der eigentlichen Wartungshandlung jedoch kostenintensiver ist als das Bereitstellen einer Sensoreneinheit, reduziert sich dennoch der Kostenaufwand für den Betrieb des Druckluftkompressorsystems insgesamt. Denn der verringerte Verkabelungsaufwand führt zu einer schneller durchführbaren Wartung.

Die Außenschnittstelle kann beispielsweise eine RJ45-Buchse aufweisen, sodass zur Ankoppelung der Sensoreneinheit ein von IT-Systemen bekanntes Standardnetzwerkkabel mit RJ 45-Steckern verwendet werden kann. Die Außenschnittstelle kann ferner als digitale Schnittstelle, beispielsweise als CAN-Bus-Schnittstelle, ausgeführt sein und insbesondere die verschiedenen Messdaten in einer standardisierten Art und Weise bereitstellen. Insbesondere kann die Kommunikation mit der Sensoreneinheit nach einem einheitlichen Muster erfolgen. Dadurch können die Ausgabewerte der unterschiedlichen Messeinheiten an ein und derselben Außenschnittstelle auf einfache Weise an einem Steuergerät des Druckluftkompressorsystems zusammengeführt werden.

Vorzugsweise ist vorgesehen, dass die mindestens eine weitere Messeinheit mindestens eine aus der folgenden Gruppe ist: Temperarturmesseinheit, Feuchtigkeitsmesseinheit, Umgebungsdruckmesseinheit, Umgebungstemperaturmesseinheit, Beschleunigungssensor, Geräuscherfassungseinheit, Schadstoffmesseinheit.

Die Vorteile des Erfindungsgedankens kommen vor allem dann zur Geltung, wenn die Sensoreneinheit dazu eingerichtet, mehrere unterschiedliche physikalische und/oder chemische Größen zu erfassen. Dadurch können komplexere Zustände des Druckluftkompressorsystems von der Sensoreneinheit erfasst werden, ohne dass weiterer Verkabelungsaufwand zwischen unterschiedlichen Messeinheiten und dem Steuergerät notwendig wird.

Vor allem, wenn zusätzlich zur üblichen Druckmessung vorzugsweise zwei und mehr der genannten Messeinheiten vorhanden sind, ergeben sich viele neuartige Auswertemöglichkeiten.

Zur Temperaturmesseinheit ist anzumerken, dass zwar temperaturkompensierte Drucksensoren bekannt sind. Bei diesen dient die Messung der Temperatur jedoch nur dazu, die Messdaten des Drucksensors gegenüber Temperaturschwankungen eines in der Messeinheit enthaltenen Messbauteils zu korrigieren. Insofern ist dort eine Bereitstellung der Temperatur als Messdaten an einer Außenschnittstelle nicht vorgesehen, sodass dies keine Temperaturmesseinheit im Sinne der vorliegenden Erfindung darstellt.

Vorzugsweise kann die Auswerte- und Steuereinheit dazu eingerichtet sein, eine Vorverarbeitung der Messdaten in der Sensoreneinheit durchzuführen.

Dadurch können die gemessenen Druckwerte bereits innerhalb der Sensoreneinheit von der Auswerte- und Steuereinheit aufbereitet werden. So kann beispielsweise eine Filterung der Messdaten und/oder auch bereits eine Bewertung der Messdaten erfolgen. Eine Bewertung der Messdaten kann beispielsweise darin liegen, als Messdaten nicht den Druck im Drucklufttank anzugeben sondern nur ein Signal für das An- und Ausschalten der Kompressoreinheit. Eine Filterung kann beispielsweise eine Druckauswertung im Frequenzbereich umfassen.

Vorzugsweise umfasst die Auswerte- und Steuereinheit einen Mikroprozessor, insbesondere einen DSP.

Vor allem aber können die von den unterschiedlichen Messeinheiten erfassten Messdaten miteinander verrechnet werden.

Dazu ist vorzugsweise vorgesehen, dass die Steuer- und Auswerteeinheit dazu eingerichtet ist, eine Transformation in Abhängigkeit von Messdaten mindestens zweier unterschiedlicher Größen vorzunehmen.

Zum Beispiel kann dadurch mithilfe einer gemessenen Luftfeuchte und einer gemessenen Lufttemperatur die Taupunkttemperatur als aufbereiteter Messwert an der Außenschnittstelle bereitgestellt werden. Oder ein gemessener Absolutdruck kann mit Hilfe einer Umgebungsdruckmesseinheit in einen Relativdruck transformiert werden.

Über eine Geräuscherfassungseinheit können Geräusche erfasst werden, die sich durch den Betrieb des Druckluftkompressorsystems ergeben. Beispielsweise können Strömungsgeräusche erfasst werden. Je nach dem in welchem Zustand sich das Druckluftkompressorsystem befindet, können beispielsweise ein Leck oder andere Defekte erkannt werden.

Vorzugsweise weist die Sensoreneinheit einen Beschleunigungssensor auf. Dadurch können Vibrationen durch eine falsche Aufstellung und/oder Defekte erkannt werden.

Dabei kann die Signalvorverarbeitung im Sensor erfolgen.

Vorzugsweise ist vorgesehen, dass die Auswerte- und Steuereinheit dazu eingerichtet ist, von einer übergeordneten Steuerung Zustandsinformationen über das Druckluftkompressorsystem zu erhalten. Dadurch kann die Auswertung der Sensoreneinheit genauer werden und/oder einer Konfiguration zugänglich gemacht werden.

Beispielsweise könnten hochfrequente Anteile eines erfassten Geräusches während die Kompressoreinheit läuft auf defekte Ventile und/oder defekte Motorlager hindeuten. Nach dem Abschalten der Kompressoreinheit könnten die entsprechenden hochfrequenten Anteile jedoch beispielsweise auf ein etwaiges Leck als Ursache für Strömungsgeräusche hinweisen.

Andererseits könnte beispielsweise eine Mittelung der Druckmessung während des Laufs der Kompressoreinheit mit einer anderen Zeitrate erfolgen als außerhalb des Laufs der Pumpe.

Vorzugsweise kann die Auswerte- und Steuereinheit dazu eingerichtet sein, komplexere Steuerungsverfahren für die Kompressoreinheit in Abhängigkeit anderer oder zusätzlicher Messdaten zum Druck zu realisieren. So könnte beispielsweise anhand einer Pulsation gemessener Schwingungen die Lauffrequenz der Kompressoreinheit gesteuert werden.

Ferner wäre es möglich, die Kompressoreinheit nicht mehr nur wie bisher bekannt ausschließlich anhand eines fest vorgegebenen Druckfensters anzusteuern sondern das Steuergerät und/oder die Sensoreneinheit könnten beispielsweise den Taupunkt berücksichtigen, indem bei einem bestimmten Feuchtegehalt und ein einer bestimmten Temperatur die obere Abschaltschwelle nach unten oder oben verschoben wird.

Vorzugsweise ist dabei vorgesehen, dass die Sensoreneinheit am Drucklufttank angeordnet ist.

Obwohl die Sensoreneinheit in einem komplexeren Druckluftkompressorsystem, beispielsweise in einer klinischen Druckluftanlage, grundsätzlich an beliebigen Stellen innerhalb der Verrohrung angeordnet sein kann, ist die Anbringung am Drucklufttank vorteilhaft. Denn dadurch wird beispielsweise der Druck unmittelbar am Speicherort gemessen, sodass sich keine Laufzeitverzögerungen ergeben.

Vorzugsweise ist vorgesehen, dass ein mit der Druckmesseinheit und/oder der weiteren Messeinheit versehender Teil der Sensoreneinheit, vorzugsweise mehr als etwa 1 cm, in einen Innenraum des Drucklufttanks hineinragt.

Dadurch werden die entsprechenden Messeinheiten von der Druckluft umströmt, sodass eine noch dynamischere Messung erfolgen kann.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: eine schematische Darstellung eines erfindungsgemäßen Druckluftkompressorsystems;
- Figur 2: eine Schrägansicht einer erfindungsgemäßen Sensoreneinheit für das Druckluftkompressorsystem.

### BESCHREIBUNG BEVORZUGTER AUSFÜHRUNGSBEISPIELE

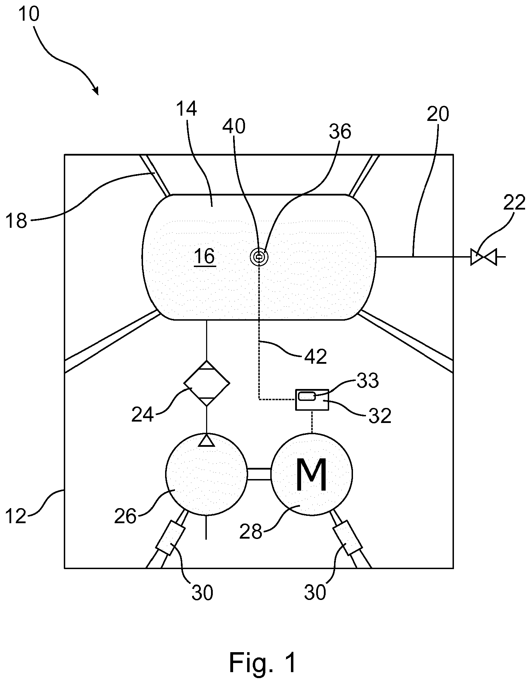

Figur 1 zeigt ein insgesamt mit dem Bezugszeichen 10 versehenes Druckluftkompressorsystem.

Das Druckluftkompressorsystem 10 weist einen Tragrahmen 12 auf, welcher die verschiedenen Baugruppen des Druckluftkompressorsystems 10 trägt. Die in Figur 1 gezeigte quadratische Form des Tragrahmens 12 ist rein beispielhaft, da der Tragrahmen 12 unterschiedlich ausgestaltet sein kann und auch nur einzelne die Baugruppen nicht umfassende Tragelemente aufweisen kann.

Als Hauptkomponente weist das Druckluftkompressorsystem 10 zunächst einen Drucklufttank 14 auf, in dessen Innenraum 16 die vom Druckluftkompressorsystem 10 bereitgestellte Druckluft bevorratet wird.

Der Drucklufttank 14 wird dabei über Haltemittel 18 an dem Tragrahmen 12 gehalten. Vom Drucklufttrank 14 führt eine Ausgangsleitung 20 zu einem Auslassventil 22.

Eingangsseitig ist der Drucklufttank 14 mit einem Trockner 24, beispielsweise einem Membrantrockner, verbunden.

Der Trockner 24 wird seinerseits eingangsseitig von einem Kompressor 26 gespeist, der über einen Motor 28 angetrieben wird.

Der Kompressor 26 und der Motor 28, die meist als Kompressoreinheit zusammengefasst sind, sind über Dämpfer 30 mit dem Tragrahmen 12 verbunden. Die Dämpfer 30 nehmen Vibrationen auf, die während des Betriebs des Kompressors 26 und insbesondere beim Anlaufen und Stoppen des Motors 28 auftreten.

Zur Steuerung des Druckluftkompressorsystems 10 ist ein Steuergerät 32 vorgesehen, das wie durch die gestrichelte Linie angedeutet elektrisch mit dem Motor 28 verbunden ist. Das Steuergerät 32 weist zudem eine Anzeige 33 hier in Form eines LCD-Displays auf, über welche dem Bediener Informationen über den Betriebszustand des Druckluftkompressorsystems 10 und ähnliches signalisiert wird.

Schließlich weist der Drucklufttank 14 einen Stutzen 36 auf, an welchem eine Sensoreneinheit 40 angeordnet ist, deren Ende in den Innenraum 16 des Druckluftbehälters 14 hineinragt.

Die Sensoreneinheit 40 ist über eine elektrische Anschlussleitung 42 mit dem Steuergerät 32 verbunden. Die Anschlussleitung 42 kann dabei insbesondere als CAN-Busleitung oder eine andere Art von Busleitung ausgeführt sein.

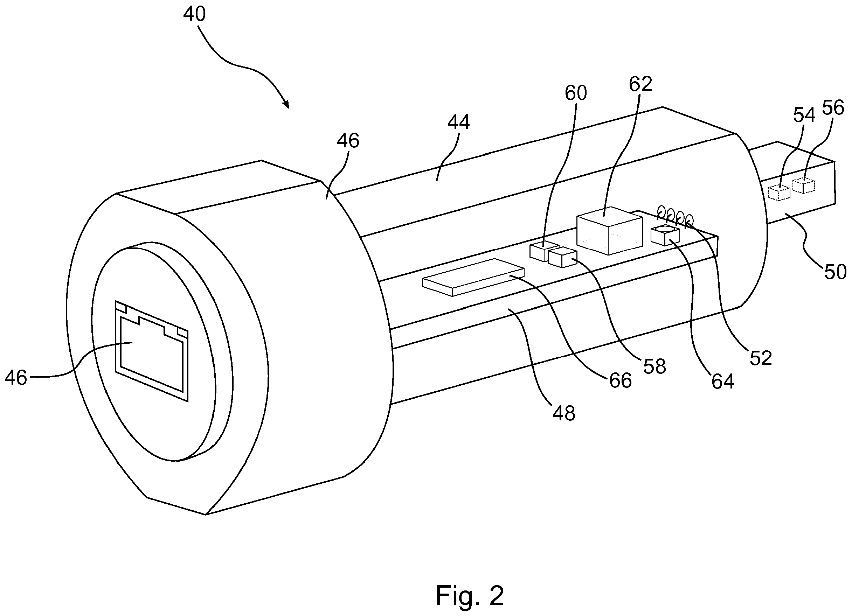

Figur 2 zeigt die Sensoreneinheit 40 im Detail.

Die Sensoreneinheit 40 weist hier als Modulgehäuse zunächst einen länglichen Grundkörper 44 auf, dessen äußeres Ende mit einem Flansch 45 versehen ist. Der Flansch 45 dient zur Befestigung der Sensoreneinheit 40 in dem Stutzen 36 des Drucklufttanks 14.

Die Abmessungen des Stutzens 36 und der Sensoreneinheit 40 sind derart aufeinander abgestimmt, dass ein im montierten Zustand nach innen gerichteter, distaler Teil der Sensoreneinheit 40 in den Innenraum 16 des Drucklufttanks 14 hineinragt.

Ferner weist die Sensoreneinheit 40 nach außen hin eine Anschlussschnittstelle 46 auf, die hier als RJ-45 Buchse ausgeführt ist.

Im Inneren des Grundkörpers 44 ist eine Platine 48 angeordnet, welche verschiedene vor allem elektrische Komponenten der Sensoreneinheit 40 trägt.

Zunächst ist am distalen Ende der Sensoreneinheit 40 hier außerhalb des Grundkörpers 44 ein Innensensorblock 50 angeordnet, der über elektrische Anschlüsse 52 mit der im Grundkörper 44 liegenden Platine 48 verbunden ist. Der Innensensorblock 50 umfasst hier beispielhaft und gestrichelt dargestellt einen Drucksensor 54 sowie einen Feuchtigkeitssensor 56 als weiter Messeinheit, die mit der Druckluft im Innenraum 16 des Drucklufttanks 14 in Kontakt stehen.

Die Platine 48 trägt ferner als weitere Messeinheiten der Sensoreneinheit 40 einen Außendrucksensor 58, einen Temperatursensor 60 sowie einen Beschleunigungssensor 62.

Schließlich weist die Sensoreneinheit 40 noch ein Mikrofon 64 auf, mit welchem Geräusche erfasst werden können.

In Abwandlung von der dargestellten Sensoreneinheit 40 können selbstverständlich nur einzelne der genannten Messeinheiten in unterschiedlichsten Kombinationen zur Anwendung kommen.

Schließlich ist auf der Platine 48 noch als Auswerte- und Steuereinheit der Sensoreneinheit 40 ein Mikroprozessor 66 angeordnet, der dazu eingerichtet ist, die einzelnen Messeinheiten anzusteuern und die gemessenen Messdaten in Rohform und/oder in aufbereiteter Form an der Anschlussschnittstelle 46 bereitzustellen.

Das Druckluftkompressorsystem 10 arbeitet wie folgt:
Mit Hilfe des Drucksensors 54 ermittelt der Mikroprozessor 66 den Druck der Druckluft im Innenraum 16 des Drucklufttanks 14. Dieser wird dann von der Sensoreneinheit 40 an das Steuergerät 32 übermittelt. Fällt der Druck unter einen vorgegebenen unteren Sollwert, so aktiviert das Steuergerät 32 den Motor 28, wodurch dieser anläuft und den Kompressor 26 antreibt. Sobald der Druck einen oberen Sollwert erreicht hat, deaktiviert das Steuergerät 32 den Motor 28 wieder.

Ferner signalisiert das Steuergerät 32 an die Sensoreneinheit 40, ob sich der Kompressor 26 im Arbeitsmodus oder im Ruhemodus befindet.

Da die Sensoreneinheit 40 außer dem Drucksensor 54 weitere Messeinheiten aufweist, sind komplexere Messungen und Auswertungen möglich.

So kann die Sensoreneinheit 40 mit Hilfe des Feuchtigkeitssensors 56 den Feuchtegehalt der Druckluft im Drucklufttank 16 bestimmen. Zusätzlich kann mit Hilfe des Temperatursensors 60 die Temperatur bestimmt werden. Der Mikroprozessor 66 kann dann dazu eingerichtet sein, aus diesen Werten den Taupunkt als Temperaturwert zu berechnen.

Dadurch kann die Sensoreneinheit 40 dem Steuergerät 32 den Taupunkt signalisieren, sodass dort keine weitere Auswertung bzw. Umrechnung stattfinden muss.

Das Steuergerät 32 seinerseits kann dem Bediener daraufhin beispielsweise an der Anzeige 33 signalisieren, dass der Trockner 24 gewartet werden muss (beispielsweise durch Austauschen der Membranen), und/oder kann diesen gegebenenfalls über ein Kondensatablassventil im Hinblick auf eine stärke Trocknung ansteuern bzw. einen Regenerierzyklus aktivieren. Denn ein steigender Taupunkt kann auf eine Fehlfunktion des Trockners 24 hinweisen.

Da die Sensoreneinheit 40 in den Innenraum 16 des Drucklufttanks 14 hineinragt, wird der Drucksensor 54 und der Feuchtigkeitssensor 56 stetig von der Druckluft umströmt. Die Reaktion der Sensoreneinheit 40 auf Änderungen der entsprechenden Werte erfolgt daher unmittelbar, da die Messung am maßgeblichen Ort, nämlich im Speichervolumen des Druckluftkompressorsystems 10, erfolgt. Dies ist im Gegensatz zu bisher bekannten Systemen zu sehen, bei welchen ein einfacher Drucksensor über eine Schlauchleitung am Drucklufttank 14 angeschlossen war und somit längere Reaktionszeiten vorherrschten.

Ferner kann die Sensoreneinheit 40 anhand der Messdaten des Beschleunigungssensors 62 Veränderungen im Vibrationsverhalten des Drucklufttanks 14 und vor allem den mit diesem verbundenen Bauteilen erkennen. Denn aufgrund der Kopplung sowohl des Drucklufttanks 14 als auch des Kompressors 26 und des Motors 28 an den Tragrahmen 12 werden die Vibrationen, die vom Kompressor 26 und dem Motor 28 ausgehen auch auf den Drucklufttank 14 übertragen. Dort werden sie dann von der Sensoreneinheit 40 erfasst. Die Sensoreneinheit 40 kann dann dazu eingerichtet sein, zu ermitteln, ob die Dämpfer 30 noch den Vorgaben entsprechen und/oder ob der Kompressor 26 und/oder der Motor 28 ein Laufproblem wie beispielsweise eine Unwucht aufweisen.

Auf diese Weise kann an der Anzeige 33 am Steuergerät 32 angezeigt werde, dass eine Wartung der Dämpfer 30, des Kompressors 26 und/oder des Motors 28 notwendig ist oder demnächst notwendig wird.

Darüber hinaus kann die Sensoreneinheit 40 beispielsweise anhand der Auswertung von Geräuschen, die mit dem Mikrofon 64 erfasst werden, fehlerhafte Ventile am Kompressor 26 oder an anderer Stelle des Druckluftkompressorsystems 10 erkennen. Beispielsweise kann ein Pfeifgeräusch ggf. zusammen mit einem Druckverlust auf ein Leck hindeuten.

Während all dieser Auswertungen werden über den Mikroprozessor in der Sensoreneinheit 40 die erfassten Messdaten aufbereitet und in einem für die Anschlussschnittstelle 46 geeigneten Format an diese übertragen. Die Daten können dabei sowohl als Rohdaten als auch bereits in teilweise oder vollständig aufbereiteter Art und Weise übermittelt werden.

So ist beispielsweise denkbar, dass an der Anschlussschnittstelle 46 nur signalisiert wird, ob der Taupunkt erreicht wurde oder nicht, anstatt sämtliche für die Bestimmung des Taupunktes notwendigen Messdaten an das Steuergerät 32 zu übermitteln.

Bei ihren internen Auswertungen kann die Sensoreneinheit 40 auch die Information über den Arbeitszustand des Kompressors 26 einbeziehen, die sie von dem Steuergerät 32 erhält. Auch hier sind weitere Rückkopplungsinformationen denkbar.

Die Sensoreneinheit 40 stellt somit eine intelligente Komponente dar, die von dem Steuergerät 32 nur insgesamt angesteuert und abgefragt werden muss, sodass das Steuergerät 32 nicht die Details der enthaltenen Messeinheiten kennen muss. Dies vereinfacht die Auslegung des Steuergerätes 32.

Stellt die Sensoreneinheit 40 intern einen Fehler an einer ihrer eigenen Messeinheiten oder ihrer Steuerelektronik fest, so wird dies ebenfalls an das Steuergerät 32 signalisiert, welches dann wiederum die Anzeige 33 entsprechend ansteuert.

Ein Wartungstechniker kann daraufhin auf einfache Weise eine neue Sensoreneinheit 40 an dem Stutzen 36 des Drucklufttanks 14 montieren, da nur eine einzige Modulkomponente mit sämtlichen Messeinheiten ausgetauscht werden muss. Dieser Austausch wird weiter dadurch vereinfacht, dass nur eine ohne Werkzeug lösbare elektrische Schnittstelle getrennt und wieder verbunden werden muss.

## Patentansprüche

1. Druckluftkompressorsystem (10) zur Bereitstellung von Druckluft für den medizinischen und dentalmedizinischen Bereich mit
a) einem Drucklufttank (14) und
b) einem Kompressor (26),
**dadurch gekennzeichnet, dass**
c) das Druckluftkompressorsystem (10) eine Sensoreneinheit (40) aufweist, die in einem gemeinsamen Modulgehäuse (44, 45) aufweist:
- eine Druckmesseinheit (54) zur Messung eines Drucks,
- mindestens eine weitere Messeinheit (56, 58, 60, 62, 64) zur Messung einer anderen physikalischen und/oder chemischen Größe,
- eine Auswerte- und Steuereinheit (66), die dazu eingerichtet ist, die Druckmesseinheit (54) zur Messung des Drucks und die weitere Messeinheit (56, 58, 60, 62, 64) zur Messung der anderen physikalischen und/oder chemischen Größe anzusteuern sowie Messdaten bereitzustellen, und
- eine Außenschnittstelle (46) zur Ausgabe der bereitgestellten Messdaten.

2. Druckluftkompressorsystem nach Anspruch 1, **dadurch gekennzeichnet, dass** die mindestens eine weitere Messeinheit (56, 58, 60, 62, 64) mindestens eine aus der folgenden Gruppe ist: Temperarturmesseinheit (60), Feuchtigkeitsmesseinheit (56), Umgebungsdruckmesseinheit, Umgebungstemperaturmesseinheit, Beschleunigungssensor (62), Geräuscherfassungseinheit (64), Schadstoffmesseinheit.

3. Druckluftkompressorsystem nach einem der vorhergehenden Ansprüche, **dadurch gekennzeichnet, dass** die Auswerte- und Steuereinheit (66) dazu eingerichtet ist, eine Vorverarbeitung der Messdaten in der Sensoreneinheit (40) durchzuführen.

4. Druckluftkompressorsystem nach Anspruch 3, **dadurch gekennzeichnet, dass** die Steuer- und Auswerteeinheit (66) dazu eingerichtet ist, eine Transformation in Abhängigkeit von Messdaten mindestens zweier unterschiedlicher Messeinheiten (54, 56, 58, 60, 62, 64) vorzunehmen.

5. Druckluftkompressorsystem nach einem der vorhergehenden Ansprüche, **dadurch gekennzeichnet, dass** als weitere Messeinheiten (56, 58, 60, 62, 64) eine Feuchtigkeitsmesseinheit (56) zur Messung der Luftfeuchtigkeit und eine Temperaturmesseinheit (60) zur Messung der Temperatur vorgesehen ist und die Auswerte- und Steuereinheit (66) vorzugsweise dazu eingerichtet ist, aus den Messdaten den Taupunkt zu ermitteln und an der Außenschnittstelle (46) bereitzustellen.

6. Druckluftkompressorsystem nach einem der vorhergehenden Ansprüche, **dadurch gekennzeichnet, dass** als weitere Messeinheit (56, 58, 60, 62, 64) ein Beschleunigungssensor (62) vorgesehen ist und die Auswerte- und Steuereinheit (66) vorzugsweise dazu eingerichtet ist, aus den Messdaten Defekte an einer Kompressoreinheit (26, 28) zu erkennen.

7. Druckluftkompressorsystem nach einem der vorhergehenden Ansprüche, **dadurch gekennzeichnet, dass** als weitere Messeinheit (56, 58, 60, 62, 64) eine Geräuscherfassungseinheit (64) vorgesehen ist und die Auswerte- und Steuereinheit (66) vorzugsweise dazu eingerichtet ist, aus den Messdaten Defekte an einer Kompressoreinheit (26, 28) und/oder eine Leckage im Druckluftkompressorsystem (10) zu erkennen.

8. Druckluftkompressorsystem nach einem der vorhergehenden Ansprüche, **dadurch gekennzeichnet, dass** die Sensoreneinheit (40) am Drucklufttank (14) angeordnet ist.

9. Druckluftkompressorsystem nach Anspruch 8, **dadurch gekennzeichnet, dass** ein mit der Druckmesseinheit (54) und/oder der weiteren Messeinheit (56, 58, 60, 62, 64) versehender Teil der Sensoreneinheit (40), vorzugsweise mehr als etwa 1 cm, in einen Innenraum (16) des Drucklufttanks (14) hineinragt.

## Claims

1. Air compressor system (10) for providing pressurized air for the medical and dental field having
a) a pressurized air tank (14) and
b) a compressor (26),
**characterized in that**
c) the air compressor system (10) comprises a sensors unit (40) which comprises in a mutual module housing (44, 45):
- a pressure measuring unit (54) for measuring a pressure,
- at least one further measuring unit (56, 58, 60, 62, 64) for measuring another physical and/or chemical quantity,
- an evaluation and control unit (66) configured to control the pressure measuring unit (54) for measuring the pressure and the further measuring unit (56, 58, 60, 62, 64) for measuring the other physical and/or chemical quantity as well as to provide measurement data, and
- an external interface (46) for the output of the provided measurement data.

2. Air compressor system according to claim 1, **characterized in that** the at least one further measuring unit (56, 58, 60, 62, 64) is at least one of the following group: temperature measuring unit (60), humidity measuring unit (56), ambient pressure measuring unit, ambient temperature measuring unit, acceleration sensor (62), noise detection unit (64), pollutant measuring unit.

3. Air compressor system according to any of the previous claims, **characterized in that** the evaluation and control unit (66) is configured to perform a pre-processing of the measurement data in the sensors unit (40).

4. Air compressor system according to claim 3, **characterized in that** the evaluation and control unit (66) is configured to conduct a transformation as a function of measurement data of at least two different measuring units (54, 56, 58, 60, 62, 64).

5. Air compressor system according to any of the previous claims, **characterized in that** as further measuring units (56, 58, 60, 62, 64) a humidity measuring unit (56) for measuring the humidity und a temperature measuring unit (60) for measuring the temperature are provided and the evaluation and control unit (66) is preferably configured to determine the dew point from the measurement data and to provide the dew point at the external interface (46).

6. Air compressor system according to any of the previous claims, **characterized in that** as further measuring unit (56, 58, 60, 62, 64) an acceleration sensor (62) is provided and the evaluation and control unit (66) is preferably configured to identify defects at the compressor unit (26, 28) from the measurement data.

7. Air compressor system according to any of the previous claims, **characterized in that** as further measuring unit (56, 58, 60, 62, 64) a noise detection unit (64) is provided and the evaluation and control unit (66) is preferably configured to identify defects at the compressor unit (26, 28) and/or a leakage in the air compressor system (10) from the measurement data.

8. Air compressor system according to any of the previous claims, **characterized in that** the sensors unit (40) is arranged on the pressurized air tank (14).

9. Air compressor system according to claim 8, **characterized in that** a part of the sensors unit (40) provided with the pressure measuring unit (54) and/or with the further measuring unit (56, 58, 60, 62, 64) protrudes into an interior (16) of the pressurized air tank (14), preferably more than approximately 1 cm.

## Revendications

1. Système de compresseur à air comprimé (10) permettant de fournir de l'air comprimé destiné aux domaines médical et odontologique, comprenant
a) un réservoir d'air comprimé (14) et
b) un compresseur (26),
**caractérisé en ce que**
c) le système de compresseur à air comprimé (10) comporte une unité de capteur (40) qui présente, dans un boîtier de module commun (44, 45) :
- une unité de mesure de pression (54) destinée à mesurer une pression,
- au moins une autre unité de mesure (56, 58, 60, 62, 64) destinée à mesurer une autre grandeur physique et/ou chimique,
- une unité d'évaluation et de commande (66) qui est conçue pour commander l'unité de mesure de pression (54) destinée à mesurer la pression et l'autre unité de mesure (56, 58, 60, 62, 64) destinée à mesurer l'autre grandeur physique et/ou chimique et à fournir des données de mesure, et
- une interface externe (46) destinée à délivrer les données de mesure fournies.

2. Système de compresseur à air comprimé selon la revendication 1, **caractérisé en ce que** ladite au moins une autre unité de mesure (56, 58, 60, 62, 64) est au moins une unité du groupe suivant : une unité de mesure de température (60), une unité de mesure d'humidité (56), une unité de mesure de pression ambiante, une unité de mesure de température ambiante, un capteur d'accélération (62), une unité de détection de bruit (64), une unité de mesure de polluants.

3. Système de compresseur à air comprimé selon l'une des revendications précédentes, **caractérisé en ce que** l'unité d'évaluation et de commande (66) est conçue pour effectuer un prétraitement des données de mesure dans l'unité de capteur (40).

4. Système de compresseur à air comprimé selon la revendication 3, **caractérisé en ce que** l'unité de commande et d'évaluation (66) est configurée pour effectuer une transformation en fonction de données de mesure provenant d'au moins deux unités de mesure différentes (54, 56, 58, 60, 62, 64).

5. Système de compresseur à air comprimé selon l'une des revendications précédentes, **caractérisé en ce qu'**il est prévu en tant qu'autres unités de mesure (56, 58, 60, 62, 64) une unité de mesure d'humidité (56) destinée à mesurer l'humidité de l'air et une unité de mesure de température (60) destinée à mesurer la température et **en ce que** l'unité d'évaluation et de commande (66) est de préférence configurée pour déterminer le point de rosée à partir des données de mesure et pour le fournir au niveau de l'interface externe (46).

6. Système de compresseur à air comprimé selon l'une des revendications précédentes, **caractérisé en ce qu'**il est prévu en tant qu'autre unité de mesure (56, 58, 60, 62, 64) un capteur d'accélération (62) et **en ce que** l'unité d'évaluation et de commande (66) est de préférence configurée pour détecter des défauts dans une unité de compresseur (26, 28) à partir des données de mesure.

7. Système de compresseur à air comprimé selon l'une des revendications précédentes, **caractérisé en ce qu'**il est prévu en tant qu'autre unité de mesure (56, 58, 60, 62, 64) une unité de détection de bruit (64) et **en ce que** l'unité d'évaluation et de commande (66) est de préférence configurée pour détecter des défauts sur une unité de compresseur (26, 28) et/ou une fuite dans le système de compresseur à air comprimé (10) à partir des données de mesure.

8. Système de compresseur à air comprimé selon l'une des revendications précédentes, **caractérisé en ce que** l'unité de détection (40) est disposée sur le réservoir d'air comprimé (14).

9. Système de compresseur à air comprimé selon la revendication 8, **caractérisé en ce qu'**une partie de l'unité de capteur (40) dotée de l'unité de mesure de pression (54) et/ou de l'autre unité de mesure (56, 58, 60, 62, 64) fait saillie, de préférence de plus d'environ 1 cm, dans un espace intérieur (16) du réservoir d'air comprimé (14).
